# EUROPEAN PATENT APPLICATION

(11) **EP 3 787 213 A2**
(43) Date of publication of application: **03.03.2021**
(21) Application number: 20191059.3
(22) Date of filing: 14.08.2020
(51) Int. Cl.: H04L 5/00, H04L 1/18, H04W 72/02, H04L 1/16

(54) **METHOD FOR PERFORMING SIDELINK TRANSMISSION AND USER EQUIPMENT USING THE SAME**

(30) Priority: 21.08.2019 US 201962889567 P; 11.08.2020 US 202016991011
(71) Applicant: Industrial Technology Research Institute, 31040 Hsinchu (TW)
(72) Inventor: LIEN, Shao-Yu, 913 Pingtung County (TW); TSAI, Hua-Lung, 104 Taipei City (TW); SHEU, Chorng-Ren, 300 Hsinchu City (TW); HU, Heng-Ming, 320 Taoyuan City (TW)
(74) Representative: Becker, Eberhard

(57) **Abstract**

A method for performing a sidelink transmission and a transmitting user equipment (UE) and a receiving UE using the same are provided. The method includes: detecting a resource pool for reserving a feedback resource, wherein the feedback resource is reserved according to a first occupied feedback resource and a second occupied feedback resource; transmitting a first signaling to the receiving UE; and receiving, from the receiving UE, a second signaling corresponding to the first signaling, wherein the second signaling is carried by the feedback resource.

## Description

### TECHNICAL FIELD

The disclosure is directed to a method for performing a sidelink transmission, a transmitting user equipment (UE), and a receiving UE.

### BACKGROUND

3GPP has launched a work item of new radio (NR) for vehicle-to-everything (V2X) in Release 16. Resources accesses in NR sidelink for V2X include Mode 1 and Mode 2, wherein Layer-1 feedback transmission are supported for both Mode 1 and Mode 2. In Mode 1, a base station schedules sidelink resources to be used for a UE to perform sidelink transmission. In Mode 2, a UE determines sidelink transmission resources within the sidelink resources configured by a base station or a network or within pre-configured sidelink resources. Traffic to be transmitted over sidelink for V2X has the characteristics such as periodic and aperiodic arrival, low latency and high reliability, and high traffic amount.

In Mode 2, each transmitting UE should perform channel sensing so as to alleviate occupying the same resources (and thus alleviated interference) with other transmitting UEs. However, for low latency sidelink transmissions, a transmitting UE should decrease the number in performing channel sensing.

To transmit a transport block (TB), a transmitting UE should be configured to: detect a physical sidelink control channel (PSCCH) transmitted by other transmitting UEs so as to know which resources are occupied by other transmitting UEs, wherein sidelink control information (SCI) indicating locations of physical sidelink shared channel (PSSCH) and physical sidelink feedback channel (PSFCH) may be conveyed via PSCCH,; select resources for PSCCH, PSSCH (for initial transmissions, repetition transmissions, and retransmissions), and PSFCH; and provide scheduling assignment (i.e., SCI) in PSCCH, so that other transmitting UEs can know the locations of the resources which being occupied.

In Release 16, a transmitting UE could reserve resources for up to 32 transmissions, but usually the transmitting UE may not fully utilize these resources for retransmissions. For an example, for a TB retransmission, the resources corresponding to PSFCH is reserved. After an acknowledgement (ACK) is received in PSFCH before the maximum number (e.g., 30) of retransmissions has been reached, the remaining reserved resources (including PSSCH and PSFCH) are released.

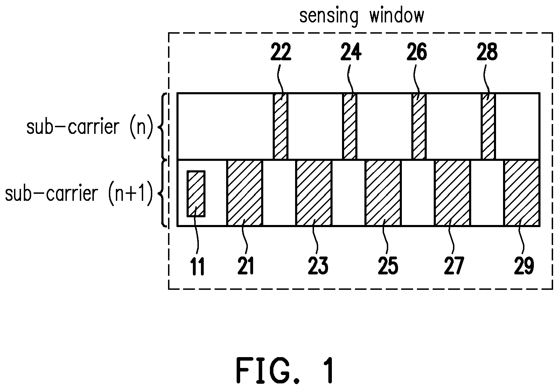

In Mode 2, a transmitting UE should sense PSCCH (i.e., detect SCI) of other transmitting UEs in order to know the resources (i.e., PSCCH, PSSCH, and PSFCH) occupied by other transmitting UEs. However, after an ACK is received in PSFCH of other transmitting UEs and the remaining reserved resources (if any) are released, the transmitting UE may not know the remaining reserved resources of other transmitting UEs are released or not. Therefore, resources utilization may be degraded. FIG. 1 illustrates a schematic diagram of a resource sensing window of a transmitting UE. Assuming reserved resources including PSCCH 11, PSSCH corresponding to PSCCH 11 (i.e., PSSCH 21, 23, 25, 27, and 29), and PSFCH corresponding to PSCCH 11 (i.e., PSFCH 22, 24, 26, and 28) are occupied by a transmitting UE. The transmitting UE may perform initial transmission and blind transmission by using PSSCH 21. If a negative acknowledgement (NACK) is received in PSFCH 22, the transmitting UE may perform hybrid automatic repeat request (HARQ) retransmission by using PSSCH 23. If an ACK is received in PSFCH 24, the remaining reserved resources including PSSCH 25, PSFCH 26, PSSCH 27, PSFCH 28, and PSSCH 29 will be released. Other transmitting UEs could detect PSCCH 11 to obtain the locations of these PSSCH and PSFCH, but cannot detect these PSSCH and PSFCH for further information. Since other transmitting UEs do not know that these remaining reserved resources are released, the released resources cannot be utilized by other transmitting UEs.

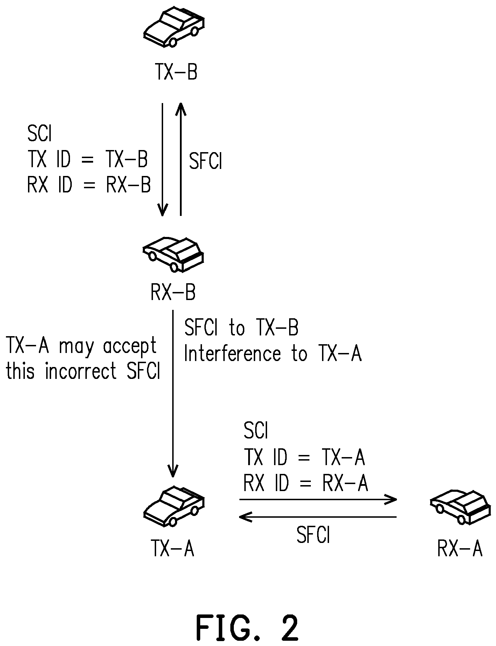

On the other hand, unicast, groupcast, and broadcast are supported in Mode 2. For unicast transmission, both ACK and NACK could be transmitted through PSFCH. The transmitting UE could transmit SCI including a transmitting UE identity (ID) and a receiving UE ID to the receiving UE. The receiving UE thus know that the transmitting UE would like to perform sidelink transmission with the receiving UE according to the SCI, and the receiving UE could determine to send sidelink feedback control information (SFCI) corresponding to the SCI to the transmitting UE. However, sending SFCI may cause some issues. FIG. 2 illustrates a schematic diagram of unicast transmissions. In FIG.2, a transmitting UE TX-A performs a unicast transmission with a receiving UE RX-A, and a transmitting UE TX-B performs another unicast transmission with a receiving UE RX-B. TX-A may transmit, to RX-A, SCI including a transmitting UE ID (or Tx ID) of TX-A and a receiving UE ID (or Rx-ID) of RX-A through PSCCH. RX-A may determine to transmit, to TX-A, SFCI through PSFCH reserved by TX-A in response to receiving SCI including the transmitting UE ID of TX-A and the receiving UE ID of RX-A. Similarly, TX-B may transmit, to RX-B, SCI including a transmitting UE ID of TX-B and a receiving UE ID of RX-B through PSCCH. RX-B may determine to transmit, to TX-B, SFCI through PSFCH reserved by TX-B in response to receiving SCI including the transmitting UE ID of TX-B and the receiving UE ID of RX-B.

Assuming the distance between TX-A and TX-B is sufficiently far such that TX-A and TX-B cannot sense SCI from each other. TX-A and TX-B may reserve the same resources for corresponding PSFCH, SFCI feedbacked by RX-A and SFCI feedback by RX-B thus may allocated in the same PSFCH. TX-A may receive SFCI from both RX-A and RX-B, and SFCI from RX-B may cause interference to SFCI from RX-A.

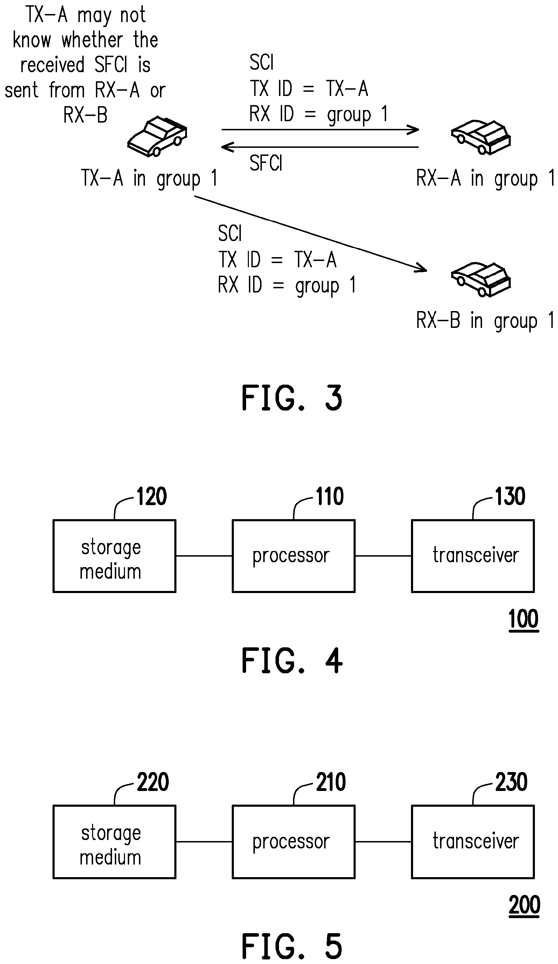

For groupcast transmission, only NACK could be transmitted through PSFCH. The transmitting UE could transmit SCI including a transmitting UE ID and a receiving UE ID to the receiving UE. The receiving UE thus know that the transmitting UE would like to perform sidelink transmission with the receiving UE according to the SCI, and the receiving UE could determine to send SFCI corresponding to the SCI to the transmitting UE. However, sending SFCI may cause some issues. FIG. 3 illustrates a schematic diagram of groupcast transmission. In FIG. 3, a transmitting UE TX-A perform a group transmission with receiving UEs in group 1, wherein group 1 includes a receiving UE RX-A and another receiving UE RX-B. TX-A may transmit SCI including a transmitting UE ID of TX-A and a receiving UE ID of group 1 through PSCCH. RX-A or RX-B may transmit SFCI through PSFCH reserved by TX-A in response to receiving SCI including the transmitting UE ID of TX-A and the receiving UE ID of group 1. However, when TX-A receives SFCI, TX-A may not be able to distinguish the source of SFCI is RX-A or RX-B.

### SUMMARY

To solve above issues, a method for performing a sidelink transmission, a transmitting user equipment (UE), and a receiving UE are provided in the disclosure.

A method for performing a sidelink transmission with a receiving user equipment (UE), adapted to a transmitting UE, comprising: detecting a resource pool for reserving a feedback resource, wherein the feedback resource is reserved according to a first occupied feedback resource and a second occupied feedback resource; transmitting a first signaling to the receiving UE; and receiving, from the receiving UE, a second signaling corresponding to the first signaling, wherein the second signaling is carried by the feedback resource.

A method for performing a sidelink transmission with a transmitting user equipment (UE), adapted to a receiving UE, comprising: receiving a first signaling from the transmitting UE; determining a first feedback resource according to the first signaling; and transmitting, to the transmitting UE, a second signaling corresponding to the first signaling via the first feedback resource, wherein the second signaling is generated according to one of a sequence with a first cyclic shift value, a sequence with a second cyclic shift value, or a sequence of a third cyclic shift value.

A transmitting user equipment (UE) for performing sidelink transmission with a receiving UE, comprising a transceiver and a processor. The transceiver communicatively connected to the receiving UE. The processor coupled to the transceiver and configured to: detect a resource pool for reserving a feedback resource, wherein the feedback resource is reserved according to a first occupied feedback resource and a second occupied feedback resource; transmit a first signaling to the receiving UE; and receive, from the receiving UE, a second signaling corresponding to the first signaling, wherein the second signaling is carried by the feedback resource.

A receiving user equipment (UE) for performing sidelink transmission with a transmitting UE, comprising a transceiver and a processor. The transceiver communicatively connected to the transmitting UE. The processor coupled to the transceiver and configured to: receive a first signaling from the transmitting UE; determine a first feedback resource according to the first signaling; and transmit, to the transmitting UE, a second signaling corresponding to the first signaling via the first feedback resource, wherein the second signaling is generated according to one of a sequence with first third cyclic shift value, a sequence with a second third cyclic shift value, or a sequence with a third cyclic shift value.

In order to make the aforementioned features and advantages of the present disclosure comprehensible, exemplary embodiments accompanied with figures are described in detail below. It is to be understood that both the foregoing general description and the following detailed description are exemplary, and are intended to provide further explanation of the disclosure as claimed.

It should be understood, however, that this summary may not contain all of the exemplary embodiments of the present disclosure and is therefore not meant to be limiting or restrictive in any manner. Also, the present disclosure would include improvements and modifications which are obvious to one skilled in the art.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 illustrates a schematic diagram of a resource sensing window of a transmitting UE.
FIG. 2 illustrates a schematic diagram of unicast transmissions.
FIG. 3 illustrates a schematic diagram of groupcast transmission.
FIG. 4 illustrates a schematic diagram of UE according to an embodiment of the disclosure.
FIG. 5 illustrates a schematic diagram of UE according to an embodiment of the disclosure.
FIG. 6 illustrates a schematic diagram of resource pool according to an embodiment of the disclosure.
FIG. 7 illustrates a schematic diagram of a unicast transmission between UE and UE according to an embodiment of the disclosure.
FIG. 8 illustrates a schematic diagram of groupcast transmissions between UE and a group of UE according to an embodiment of the disclosure.
FIG. 9 illustrates a flowchart of a method for performing a sidelink transmission with a UE according to an embodiment of the disclosure.
FIG. 10 illustrates a flowchart of a method for performing a sidelink transmission with a UE according to an embodiment of the disclosure.

### DESCRIPTION OF THE EMBODIMENTS

Reference will now be made in detail to the present exemplary embodiments of the disclosure, examples of which are illustrated in the accompanying drawings. Wherever possible, the same reference numbers are used in the drawings and the description to refer to the same or like parts.

The disclosure is directed to a method for performing a sidelink transmission, a transmitting user equipment (UE), and a receiving UE.

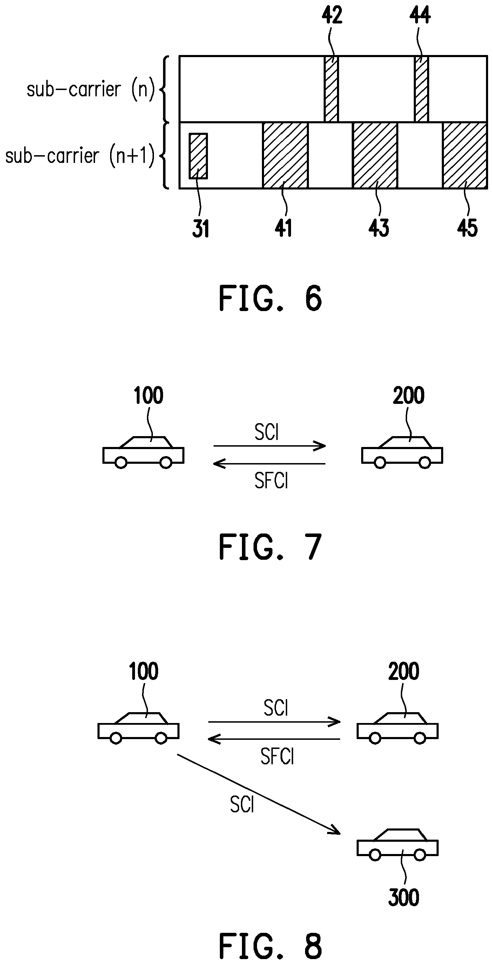

FIG. 4 illustrates a schematic diagram of UE 100 according to an embodiment of the disclosure. UE 100 may perform Mode 2 sidelink transmission, and may include a processor 110, a storage medium 120, and a transceiver 130. The processor 110 is coupled to the storage medium 120 and the transceiver 130 and is configured to at least implement the method as described in FIG. 6-9 as well as its exemplary embodiment and alternative variations.

The processor 110 could be implemented by using programmable units such as a micro-processor, a micro-controller, a digital signal processor (DSP) chips, or a field programmable gate array (FPGA), etc. The functions of the processor 110 may also be implemented with separate electronic devices or ICs. It should be noted that the functions of processor 110 may be implemented with either hardware or software.

The storage medium 120 may be, for example, any type of fixed or removable random access memory (RAM), a read-only memory (ROM), a flash memory, a hard disk drive (HDD), a solid state drive (SSD) or similar element, or a combination thereof, configured to store a plurality of modules or various applications executable by the processor 110.

The transceiver 130 may be configured to transmit and receive signals respectively in the radio frequency or in the mmWave frequency. The transceiver 130 may also perform operations such as low noise amplifying, impedance matching, frequency mixing, up or down frequency conversion, filtering, amplifying, and so forth. The transceiver 130 may include one or more digital-to-analog (D/A) converters or analog-to-digital (A/D) converters which are configured to convert from an analog signal format to a digital signal format during uplink signal processing and from a digital signal format to an analog signal format during downlink signal processing. The transceiver 130 may include an antenna array which may include one or multiple antennas to transmit and receive omni-directional antenna beams or directional antenna beams.

FIG. 5 illustrates a schematic diagram of UE 200 according to an embodiment of the disclosure. UE 200 may perform Mode 2 sidelink transmission, and may include a processor 210, a storage medium 220, and a transceiver 230. The processor 210 is coupled to the storage medium 220 and the transceiver 230 and is configured to at least implement the method as described in FIG. 6-8 and 10 as well as its exemplary embodiment and alternative variations.

The processor 210 could be implemented by using programmable units such as a micro-processor, a micro-controller, a DSP chips, or a FPGA, etc. The functions of the processor 210 may also be implemented with separate electronic devices or ICs. It should be noted that the functions of processor 210 may be implemented with either hardware or software.

The storage medium 220 may be, for example, any type of fixed or removable RAM, a ROM, a flash memory, a HDD, a SSD or similar element, or a combination thereof, configured to store a plurality of modules or various applications executable by the processor 210.

The transceiver 230 may be configured to transmit and receive signals respectively in the radio frequency or in the mmWave frequency. The transceiver 230 may also perform operations such as low noise amplifying, impedance matching, frequency mixing, up or down frequency conversion, filtering, amplifying, and so forth. The transceiver 230 may include one or more D/A converters or A/D converters which are configured to convert from an analog signal format to a digital signal format during uplink signal processing and from a digital signal format to an analog signal format during downlink signal processing. The transceiver 230 may include an antenna array which may include one or multiple antennas to transmit and receive omni-directional antenna beams or directional antenna beams.

In order to perform a sidelink transmission with UE 200, UE 100 may detect a resource pool for occupying one or more feedback resources. Specifically, UE 100 may detect an occupied control resource from the resource pool and determine the locations of one or more occupied feedback resources according to the occupied control resource, wherein the occupied control resource is occupied by the other transmitting UE and the occupied control resource may include SCI indicating the locations of the one or more occupied feedback resources. After determining the locations of occupied feedback resources which are occupied by the other transmitting UE, UE 100 may reserve one or more feedback resource for performing a sidelink transmission with UE 200 according to the occupied feedback resources which are occupied by the other transmitting UE. For example, UE 100 may avoid to reserving a feedback resource which has been occupied by the other transmitting UE.

FIG. 6 illustrates a schematic diagram of resource pool according to an embodiment of the disclosure. UE 100 may detect PSCCH 31 and may determine the locations of PSSCH (e.g., PSSCH 41, 43, and 45) and PSFCH (e.g., PSFCH 42 and 44) corresponding to PSCCH 31 according to SCI carried by PSCCH 31. Since PSSCH 41, PSFCH 42, PSSCH 43, PSFCH 44, and PSSCH 45 have been occupied by the other transmitting UE, UE 100 may determine to reserve resources other than PSSCH 41, PSFCH 42, PSSCH 43, PSFCH 44, and PSSCH 45 for performing sidelink transmission with UE 200.

UE 100 may further detect one or more occupied feedback resources which are occupied by the other transmitting UE and may determine whether the occupied feedback resources carry an ACK corresponding to the other UE. If an ACK is carried by one of the occupied feedback resources, UE 100 may determine that the remaining occupied feedback resources may be released. Thus, UE 100 may reserve the remaining occupied feedback resources as the feedback resource for performing sidelink transmission with UE 200. For example, if UE 100 detects an ACK is carried by PSFCH 42 which corresponds to PSCCH 31, UE 100 may determine that the remaining occupied feedback resources including PSSCH 43, PSFCH 44, and PSSCH 45 may be released. Thus, UE 100 may occupy a feedback resource corresponding to PSSCH 43, PSFCH 44, or PSSCH 45 for performing sidelink transmission with UE 200.

After occupying a control resource (e.g., PSCCH), a feedback resource (e.g., PSFCH), and a shared resource (e.g., PSSCH), UE 100 may transmit a first signaling to UE 200 through the control resource, wherein the first signaling may be SCI. The SCI may indicate the locations of the feedback resource and the shared resource corresponding to the control resource. UE 200 may determine the feedback resource and the shared resource according to SCI included in the first signaling, wherein the first signaling may be carried by the control resource. For example, UE 100 may transmit a first signaling to UE 200 through PSCCH 31, wherein SCI included in the first signaling may indicate the locations of PSSCH 41, PSFCH 42, PSSCH 43, PSFCH 44, and PSSCH 45, wherein PSSCH 41, PSFCH 42, PSSCH 43, PSFCH 44, and PSSCH 45 have been occupied by UE 100. UE 200 may determine the locations of PSSCH 41, PSFCH 42, PSSCH 43, PSFCH 44, and PSSCH 45 according to SCI included in the first signaling.

After determining the locations of the shared resource and the feedback resource according to the SCI including in the first signaling, UE 200 may try to receive data transmitted by UE 100 through the shared resource. If UE 200 does not successfully receive the data through the shared resource, UE 200 may determine to transmit a NACK sequence to UE 100. If UE 200 successfully receive the data through the shared resource, UE 200 may or may not determine to transmit an ACK sequence to UE 100. UE 200 may generate a second signaling corresponding to the first signaling, wherein the second signaling may be SFCI, and the SFCI may be associated with an ACK sequence or a NACK sequence. UE 200 may transmit the second signaling to UE 100 through the feedback resource indicated by the SCI. UE 100 may receive the second signaling through the feedback resource. UE 100 may decode the second signaling to recognize the source of the second signaling and to determine that the second signaling is associated with an ACK sequence or a NACK sequence. If the second signaling is associated with a NACK sequence, UE 100 may determine to perform a retransmission with UE 200 by using the remaining shared resource. If the second signaling is associated with an ACK sequence, UE 100 may determine to release the remaining reserved resources.

For example, after receiving the SCI from PSCCH 31, UE 200 may try to receive data transmitted by UE 100 through PSSCH 41. If UE 200 does not successfully receive the data through PSSCH 41, UE 200 may generate a second signaling associated with a NACK sequence and may transmit the second signaling to UE 100 through PSFCH 42. If UE 100 receives the second signaling from UE 200 through PSFCH 42 and determines that the second signaling is associated with a NACK sequence, UE 100 may re-transmit the data to UE 200 through PSSCH 43. If UE 200 successfully receive the data through PSSCH 43, UE 200 may generate a second signaling associated with an ACK sequence and may transmit the second signaling to UE 100 through PSFCH 44. If UE 100 receives the second signaling from UE 200 through PSFCH 44 and determines that the second signaling is associated with an ACK sequence, UE 100 may release the remaining reserved resources such as PSSCH 45.

FIG. 7 illustrates a schematic diagram of a unicast transmission between UE 100 and UE 200 according to an embodiment of the disclosure. UE 100 may transmit a first signaling (i.e., SCI) to UE 200 through a control resource, wherein the first signaling may indicate a feedback resource and a shared resource. Then, UE 100 may transmit data to UE 200 through the shared resource. UE 200 may determine the locations of the feedback resource and the shared resource, and may receive the data carried by the shared resource. If the data is successfully received by UE 200, UE 200 may generate a second signaling (i.e., SFCI) associated with an ACK sequence. If the data is not successfully received by UE 200, UE 200 may generate a second signaling associated with a NACK sequence. Specifically, UE 200 may generate the second signaling according to a first cyclic shift value in response to receiving the data successfully, wherein the first cyclic shift value corresponds to the ACK sequence. On the other hand, UE 200 may generate the second signaling according to a second cyclic shift value in response to not receiving the data successfully, wherein the second cyclic shift value corresponds to the NACK sequence. The first cyclic shift value and the second shift value may be derived by an ID of UE 100 (i.e., a Layer 1 transmitting UE ID), wherein the ID of UE 100 may be pre-stored in the storage medium 220 of UE 200 or may be transmitted from UE 100 to UE 200 (e.g., through the first signaling). That is, the ID of UE 100 is used in generating (or scrambling) the sequence (or code) of SFCI.

UE 200 may transmit the second signaling to UE 100 through the feedback resource. After receiving the second signaling, UE 100 may decode the second signaling to determine if the second signaling is corresponded to an ACK or a NACK. Specifically, UE 100 may determine the second signaling is corresponded to an ACK in response to successfully decoding the second signaling according to the first cyclic shift value, and may determine the second signaling is corresponded to a NACK in response to successfully decoding the second signaling according to the second cyclic shift value, wherein the first cyclic shift value and the second cyclic shift value may be derived by the ID of UE 100, wherein the ID of UE 100 may be pre-stored in the storage medium 120 of UE 100. In response to successfully decoding the second signaling according to the first cyclic shift value or the second cyclic shift value, UE 100 may determine that the target of the second signaling is UE 100 since the first cyclic shift value or the second cyclic shift value could be derived by the ID of UE 100.

FIG. 8 illustrates a schematic diagram of groupcast transmissions between UE 100 and a group of UE according to an embodiment of the disclosure, wherein the group of UE may include UE 200 and UE 300. It should be noted that the number of UEs in the group is not limited. UE 100 may transmit a first signaling (i.e., SCI) to a group of UE when performing groupcast transmissions. UE 100 may transmit the first signaling to UE 200 and UE 300 through the control resource, wherein the first signaling may indicate a feedback resource and a shared resource. Then, UE 100 may transmit data to UE 200 and UE 300 through the shared resource. UE 200 or UE 300 may determine the locations of the feedback resource and the shared resource, and may receive the data carried by the shared resource. If the data is not successfully received by, for example, UE 200, UE 200 may generate a second signaling associated with NACK sequence. Specifically, UE 200 may generate the second signaling according to a third cyclic shift value in response to not receiving the data successfully, wherein the third cyclic shift value corresponds to the NACK sequence. The third cyclic shift value may be derived by an ID of UE 100 (i.e., a Layer-1 transmitting UE ID) and an ID of UE 200 (i.e., a Layer-1 receiving UE ID), wherein the ID of UE 100 and the ID of UE 200 may be pre-stored in the storage medium 220 of UE 200. In some embodiment, the ID of UE 100 may be transmitted from UE 100 to UE 200 (e.g., through the first signaling). hat is, the ID of UE 100 and the ID of UE 200 are used in generating (or scrambling) the sequence (or code) of SFCI.

UE 200 may transmit the second signaling to UE 100 through the feedback resource. After receiving the second signaling, UE 100 may decode the second signaling to determine if the second signaling is corresponded to a NACK. Specifically, UE 100 may determine the second signaling is corresponded to a NACK in response to successfully decoding the second signaling according to the third cyclic shift value, wherein the third cyclic shift value may be derived by the ID of UE 100 and the ID of UE 200, wherein the ID of UE 100 and the ID of UE 200 may be pre-storage in the storage medium 120 of UE 100. In response to successfully decoding the second signaling according to the third cyclic shift value, UE 100 may determine that the target of the second signaling is UE 100 and the source of the second signaling is UE 200 since the third cyclic shift value could be derived by the ID of UE 100 and the ID of UE 200. Accordingly, UE 100 may determine, from a plurality of UE in the same group, the source of a received SFCI.

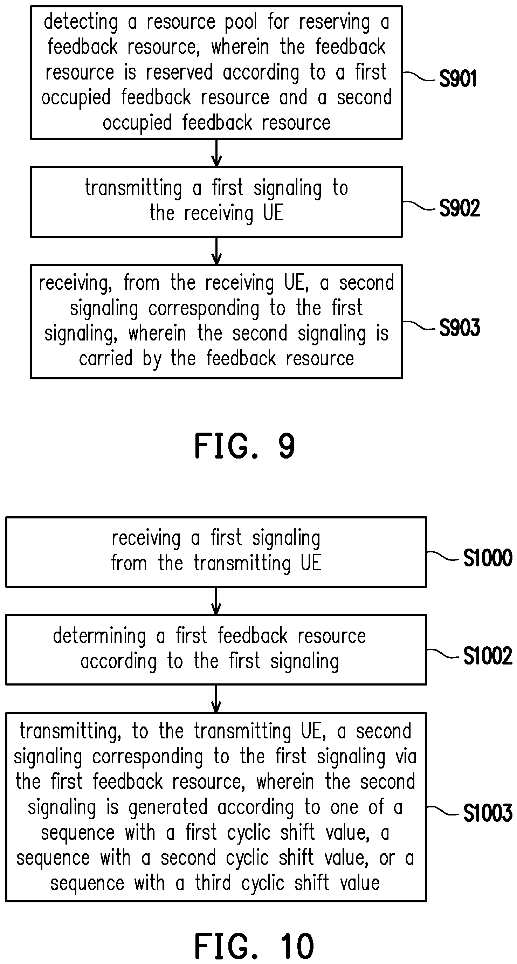

FIG. 9 illustrates a flowchart of a method for performing a sidelink transmission with a UE according to an embodiment of the disclosure, wherein the method could be implemented by UE 100 as shown in FIG. 4. In step S901, detecting a resource pool for reserving a feedback resource, wherein the feedback resource is reserved according to a first occupied feedback resource and a second occupied feedback resource. In step S902, transmitting a first signaling to the receiving UE. In step S903, receiving, from the receiving UE, a second signaling corresponding to the first signaling, wherein the second signaling is carried by the feedback resource.

FIG. 10 illustrates a flowchart of a method for performing a sidelink transmission with a transmitting UE according to an embodiment of the disclosure, wherein the method could be implemented by UE 200 as shown in FIG. 5. In step S1001, receiving a first signaling from the transmitting UE. In step S 1002, determining a first feedback resource according to the first signaling. In step S1003, transmitting, to the transmitting UE, a second signaling corresponding to the first signaling via the first feedback resource, wherein the second signaling is generated according to a sequence with a first cyclic shift value, a sequence with a second cyclic shift value, or a sequence with a third cyclic shift value.

In view of the aforementioned descriptions, a transmitting UE may detect PSFCH of another transmitting UE so as to find out whether some resources are released by other transmitting UE or not, and may schedule sidelink resources accordingly. A receiving UE may generate ACK sequence and NACK sequence with different cyclic shift value, wherein each of the cyclic shift value may derived by an ID of the transmitting UE and may further derived by an ID of the receiving UE. After receiving SFCI from the receiving UE, the transmitting UE may determine the source and the content of the SFCI based on the cyclic shift value used by the SFCI.

No element, act, or instruction used in the detailed description of disclosed embodiments of the present application should be construed as absolutely critical or essential to the present disclosure unless explicitly described as such. Also, as used herein, each of the indefinite articles "a" and "an" could include more than one item. If only one item is intended, the terms "a single" or similar languages would be used. Furthermore, the terms "any of' followed by a listing of a plurality of items and/or a plurality of categories of items, as used herein, are intended to include "any of', "any combination of', "any multiple of', and/or "any combination of multiples of the items and/or the categories of items, individually or in conjunction with other items and/or other categories of items. Further, as used herein, the term "set" is intended to include any number of items, including zero. Further, as used herein, the term "number" is intended to include any number, including zero.

## Claims

1. A method for performing a sidelink transmission with a receiving user equipment (200), UE, adapted to a transmitting UE (100), **characterised in that**, comprising:
detecting a resource pool for reserving a feedback resource, wherein the feedback resource is reserved according to a first occupied feedback resource (41, 42, 43, 44) and a second occupied feedback resource (42, 43, 44, 45);
transmitting a first signaling to the receiving UE (200); and
receiving, from the receiving UE (200), a second signaling corresponding to the first signaling, wherein the second signaling is carried by the feedback resource.

2. The method of claim 1, wherein the step of detecting the resource pool for reserving the feedback resource comprises:
detecting an occupied control resource (31) from the resource pool; and
determining the first occupied feedback resource (41, 42, 43, 44) and the second occupied feedback resource (42, 43, 44, 45) according to the occupied control resource (31).

3. The method of claim 2, wherein the step of detecting the resource pool for reserving the feedback resource further comprising:
detecting the first occupied feedback resource (41, 42, 43, 44) and determining whether the first occupied feedback resource (41, 42, 43, 44) carries an acknowledgement corresponding to a second receiving UE (300).

4. The method of claim 3, wherein the step of detecting the resource pool for reserving the feedback resource further comprising:
determining the second occupied feedback resource (42, 43, 44, 45) has been released in response to the first occupied feedback resource (41, 42, 43, 44) carrying the acknowledgement.

5. The method of claim 4, further comprising:
reserving the second occupied feedback resource (42, 43, 44, 45) as the feedback resource in response to determining the second occupied feedback resource (42, 43, 44, 45) has been released.

6. The method of claim 2, wherein the occupied control resource (31) comprising sidelink control information, wherein the sidelink control information indicate a first location of the first occupied feedback resource (41, 42, 43, 44) and a second location of the second occupied feedback resource (42, 43, 44, 45).

7. The method of claim 1, further comprising:
determining the second signaling is corresponded to an acknowledgement in response to successfully decoding the second signaling according to a sequence with a first cyclic shift value; and
determining the second signaling is corresponded to a negative acknowledgement in response to successfully decoding the second signaling according to a sequence with a second cyclic shift value.

8. The method of claim 7, wherein the first cyclic shift value and the second cyclic shift value are derived by an identity of the transmitting UE (100).

9. The method of claim 1, further comprising:
determining the second signaling is corresponding to a negative acknowledgement in response to successfully decoding the second signaling according to a third cyclic shift value.

10. The method of claim 9, wherein the third cyclic shift value is derived by a first identity of the transmitting UE (100) and a second identity of the receiving UE (200).

11. The method of claim 1, wherein the first signaling comprising sidelink control information and the second signaling comprising sidelink feedback control information.

12. A method for performing a sidelink transmission with a transmitting user equipment (100), UE, adapted to a receiving UE (200), **characterised in that**, comprising:
receiving a first signaling from the transmitting UE (100);
determining a first feedback resource (41, 42, 43, 44, 45) according to the first signaling; and
transmitting, to the transmitting UE (100), a second signaling corresponding to the first signaling via the first feedback resource (41, 42, 43, 44, 45), wherein the second signaling is generated according to one of a sequence with a first cyclic shift value, a sequence with a second cyclic shift value, or a sequence with a third cyclic shift value.

13. The method of claim 12, further comprising:
determining a shared resource (41, 43, 45) according to the first signaling;
generating the second signaling according to the sequence with the first cyclic shift value in response to receiving data via the shared resource (41, 43, 45); and
generating the second signaling according to the sequence with the second cyclic shift value in response to not receiving the data via the shared resource (41, 43, 45).

14. The method of claim 13, wherein the first cyclic shift value and the second cyclic shift value are derived by an identity of the transmitting UE (100).

15. The method of claim 12, further comprising:
determining a shared resource (41, 43, 45) according to the first signaling; and
generating the second signaling according to the sequence with the third cyclic shift value in response to not receiving data via the shared resource (41, 43, 45).

16. The method of claim 15, wherein the third cyclic shift value is derived by a first identity of the transmitting UE (100) and a second identity of the receiving UE (200).

17. The method of claim 12, wherein the first signaling comprising sidelink control information and the second signaling comprising sidelink feedback control information.

18. A transmitting user equipment (100), UE, for performing sidelink transmission with a receiving UE (200), **characterised in that**, comprising:
a transceiver (130), communicatively connected to the receiving UE (200); and
a processor (110), coupled to the transceiver (130) and configured to:
detect a resource pool for reserving a feedback resource, wherein the feedback resource is reserved according to a first occupied feedback resource (41, 42, 43, 44) and a second occupied feedback resource (42, 43, 44, 45);
transmit a first signaling to the receiving UE (200); and
receive, from the receiving UE (200), a second signaling corresponding to the first signaling, wherein the second signaling is carried by the feedback resource.

19. A receiving user equipment (200), UE, for performing sidelink transmission with a transmitting UE (100), **characterised in that**, comprising:
a transceiver (230), communicatively connected to the transmitting UE (100); and
a processor (210), coupled to the transceiver (230) and configured to:
receive a first signaling from the transmitting UE (100);
determine a first feedback resource (41, 42, 43, 44, 45) according to the first signaling;
and
transmit, to the transmitting UE (100), a second signaling corresponding to the first signaling via the first feedback resource (41, 42, 43, 44, 45), wherein the second signaling is generated according to one of a sequence with a first third cyclic shift value, a sequence with a second third cyclic shift value, or a sequence with a third cyclic shift value.
